# FASCICULE DE BREVET EUROPEEN

(11) **EP 2 379 999 B1**
(45) Date de publication et mention de la délivrance du brevet: **05.06.2013**
(21) Numéro de dépôt: 10700395.6
(22) Date de dépôt: 06.01.2010
(51) Int. Cl.: G01M 3/38, G01M 3/20, G01M 3/22

(54) **DISPOSITIF DE DETECTION DE MICRO-FUITES**
VORRICHTUNG ZUR ERKENNUNG VON MIKROLECKS
DEVICE FOR DETECTING MICRO-LEAKS

(30) Priorité: 07.01.2009 FR 0950070
(43) Date de publication de la demande: 26.10.2011
(73) Titulaire: Commissariat à l'Énergie Atomique et aux Énergies Alternatives, 75015 Paris (FR)
(72) Inventeur: PAILLOUX, Agnès, F-91190 Gif Sur Yvette (FR); COUSIN, Julien, 51100 Reims (FR); DEBECKER, Isabelle, F-75017 Paris (FR); WEULERSSE, Jean-Marc, F-91120 Palaiseau (FR)
(74) Mandataire: Ilgart, Jean-Christophe
(86) Numéro de dépôt international: PCT/EP2010/050080
(87) Numéro de publication internationale: WO 2010/079183

(56) Documents cités:
- DE-A1- 4 127 543
- GB-A- 1 301 021
- GB-A- 1 431 269
- JP-A- 60 188 829

## Description

Le sujet de l'invention est un dispositif de détection de micro-fuites de gaz, particulièrement sur une grande structure, et qui permet aussi de les localiser.

Les micro-fuites se distinguent par leur petit débit. On voudrait détecter des débits de l'ordre 10⁻⁸ ou 10⁻⁹ mbar.l/s. Certains moyens courants de détection de fuites plus importantes leur sont inapplicables, et d'autres ont les inconvénients soit d'être trop lents pour servir à des localisations sur des grandes structures, où des mesures très nombreuses sont nécessaires, soit d'être sensibles à certaines pollutions de l'air en détectant à tort les perturbations qu'elles apportent à la mesure comme des fuites. D'autres enfin sont spécifiques à certains gaz. On est amené, pour l'application présente, à utiliser un gaz traceur qu'on insuffle derrière la paroi à vérifier à une pression lui permettant de traverser les fuites, puis à utiliser un dispositif renifleur pour capturer sans cesse des échantillons gazeux devant la structure à vérifier, et tenter de caractériser le gaz traceur dans les échantillons.

Le dispositif de caractérisation ordinaire est un spectromètre de masse qui ionise les molécules des échantillons et les soumet à un champ magnétique qui les dévie de quantités variables d'après leurs masses atomiques. Il devient alors possible d'isoler les ions du gaz traceur, mais le spectromètre de masse présente plusieurs inconvénients. Il est d'abord compliqué de modifier le réglage pour changer d'ions détectés. La détection elle-même peut être imprécise si des ions de masses atomiques voisines coexistent dans les échantillons. On choisit ainsi en général l'hélium comme gaz traceur, puisqu'un élément de masse atomique faible est plus facile à distinguer de ses voisins et que l'hélium, contrairement à l'hydrogène dont la masse atomique est encore plus petite, est ininflammable. On peut toutefois regretter d'être limité à un gaz traceur unique et plutôt coûteux. Il est encore plus gênant que la présence d'hélium naturel dans l'air, beaucoup plus abondant (5 ppm) que les teneurs qu'on voudrait mesurer (jusqu'à 1 ppb environ), oblige à un réglage de zéro délicat de l'appareil.

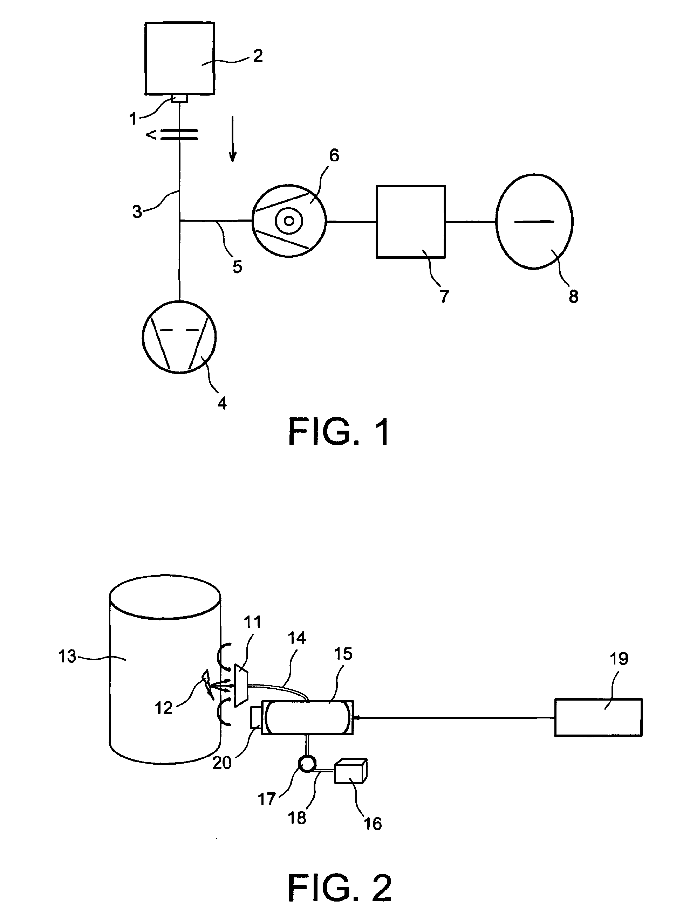

Un autre genre d'inconvénient va être maintenant explicité à l'aide de la description d'un dispositif possible à la figure 1. L'ouverture d'une coupelle 1 est posée à la surface d'une structure 2 dont l'étanchéité doit être vérifiée, ou tenue à peu de distance. Un tuyau 3 relie la coupelle 1 à une pompe primaire 4, qui crée une aspiration du volume gazeux présent dans la coupelle 1 et aux alentours par le tuyau 3. Un embranchement 5 du tuyau 3 est occupé par une pompe secondaire 6 turbo-moléculaire et un spectromètre de masse 7. La création d'un vide poussé avec la pompe primaire 4 et la pompe secondaire 6 est nécessaire au fonctionnement correct du spectromètre de masse 7 à une pression inférieure à 10⁻⁴ mbar, faute de quoi les ions subiraient trop de collisions, perturbatrices de la mesure, pendant leurs trajectoires. Les ions d'hélium, ayant traversé la paroi 2, sortent finalement du spectromètre de masse 7 pour être détectés. L'hélium qui a abouti à la pompe primaire 4 est toutefois perdu pour la détection, ce qui constitue encore une limitation pour le débit détectable de micro-fuites. La nécessité de produire un vide poussé impose en pratique un grand débit d'aspiration, de l'ordre de 40 l/s pour de petits débits de fuite. Le dispositif est donc volumineux et bruyant, et il ne permet pas en pratique de détecter des débits de fuite inférieurs à 5.10⁻⁶ mbar.l/s, très en deçà des valeurs voulues.

Une autre cause d'insuffisance des dispositifs connus, plus fondamentale, est que le gaz de la coupelle est mal aspiré. Même si une micro-fuite est présente devant la coupelle, une partie du gaz à détecter peut échapper à la détection en séjournant dans la coupelle pendant un temps supérieur à celui de l'essai, ou être dispersée par la circulation ambiante du gaz, même dans une pièce apparemment au repos. La détection partielle a aussi pour conséquence de relever le seuil critique au-delà duquel la détection est impossible.

On cite en exemple de dispositif existant, le document GB-A-1 431 269 qui décrit un dispositif de détection de fuites sur une paroi, comprenant une coupelle à placer devant une fuite, un appareil de détection d'une espèce chimique ayant fui, un tuyau reliant la coupelle et l'appareil de détection, et une pompe instaurant une circulation de gaz à travers le tuyau. La coupelle comprend au moins une face principale, une face périphérique, la face principale pouvant être considérée comme étant essentiellement plate et la face périphérique comme étant perpendiculaire à la face principale.

L'invention a pour but de reculer la limite des débits des détections micro-fuites. Un autre objet de l'invention est d'appliquer l'appareil à des gaz traceurs des différentes espèces chimiques.

Sous une forme générale, l'invention concerne un dispositif de détection de micro-fuites, comprenant une coupelle à placer devant une micro-fuite supposée, un appareil de détection d'une espèce chimique (gaz traceur) ayant fui, un tuyau reliant la coupelle et l'appareil de détection, et une pompe instaurant une circulation de gaz à travers le tuyau, caractérisé en ce que la coupelle comprend une face principale, une face périphérique et des nervures, la face principale était essentiellement plate, la face périphérique étant essentiellement perpendiculaire à la face principale et pourvue d'ouvertures, et les nervures sont situées sous la face principale en divergeant d'un emplacement où le tuyau débouche à la paroi périphérique en délimitant des canaux menant respectivement aux ouvertures.

La conséquence de cette disposition de la coupelle est que le volume qu'elle englobe est réparti en canaux dont le contenu est parcouru de courants de gaz menant à l'emplacement de débouché du tuyau. Tout le contenu de la coupelle est donc aspiré et détecté. Le caractère plat de la face principale donne des canaux de sections plus uniforme et réduit donc les irrégularités d'écoulement. La face périphérique peut être posée sur la paroi à inspecter avec une étanchéité suffisante pour éviter le balayage de la paroi par un courant de gaz indésiré qui pourrait emporter le gaz à détecter. Le gaz extérieur nécessaire à l'inspiration passe par les ouvertures et se retrouve canalisé jusqu'à l'emplacement où les tuyaux débouchent.

Selon un perfectionnement, une aire totale des ouvertures est plus grande qu'une section totale des canaux à l'emplacement où le tuyau débouche, et cette section est elle-même plus grande qu'une section des tuyaux. Une telle disposition garantit des vitesses croissantes du gaz aspiré, qui renforcent l'aspiration.

Avantageusement encore, l'emplacement où le tuyau débouche est central et les canaux d'ouvertures sont au moins au nombre de huit. Une canalisation plus régulière de l'aspiration de gaz est réalisée si les canaux ne sont pas trop larges.

Dans ces conditions, il est avantageux que la coupelle soit carrée et comprenne six canaux et six ouvertures par côté.

Le seuil de détection du débit détectable est encore abaissé et différentes espèces de gaz traceurs peuvent être détectées si l'appareil de détection comprend une cavité optique résonante vers laquelle le gaz mis en circulation est dirigé et un laser réglé à une raie d'absorption de lumière par l'espèce chimique, et la pompe a un débit au plus égal à 1 l/min du gaz, et de préférence compris entre 60 cm³/min et 120 cm³/min environ.

L'invention sera maintenant décrite plus en détail en liaison aux figures suivantes :
- la figure 1, déjà décrite, représente un dispositif conforme à l'art antérieur,
- la figure 2 un dispositif conforme à l'invention,
- la figure 3 détaille une cavité optique résonante,
- la figure 4 est une vue de côté de la coupelle,
- la figure 5 une vue de dessus de la coupelle,
- et la figure 6 est une coupe de la coupelle.

On passe à la figure 2. Le dispositif selon l'invention comprend une coupelle 11 d'aspiration placée devant une micro-fuite 12 (réelle ou supposée) d'une paroi 13 à examiner, et la coupelle 11 est munie d'un tuyau 14 qui la fait communiquer à une cavité résonante 15 dont le contenu est renouvelé par une pompe 16, qui est ici une pompe de petit débit, de l'ordre de 60 à 120 cm³ de gaz à la minute, à pression ambiante, aucun vide n'étant créé. Des valeurs supérieures et inférieures peuvent aussi être proposées d'après les taux de fuites qu'on cherche à détecter. Des débits nettement supérieurs à 1 l/min n'offriraient pas d'intérêt puisqu'ils conviendraient à des taux supérieurs aux micro-fuites, pour lesquels d'autres méthodes seraient applicables. D'autres éléments importants du dispositif sont une vanne de réglage de débit 17 située sur un second tuyau 18 reliant la cavité résonante 15 à la pompe 16, un laser 19 pointant un faisceau lumineux vers la cavité résonante 15 et un photodétecteur 20 mesurant l'absorption du faisceau par le contenu de la cavité et indiquant ainsi la concentration dans l'atmosphère de la cavité résonante 15 de l'espèce chimique qui est responsable de cette absorption.

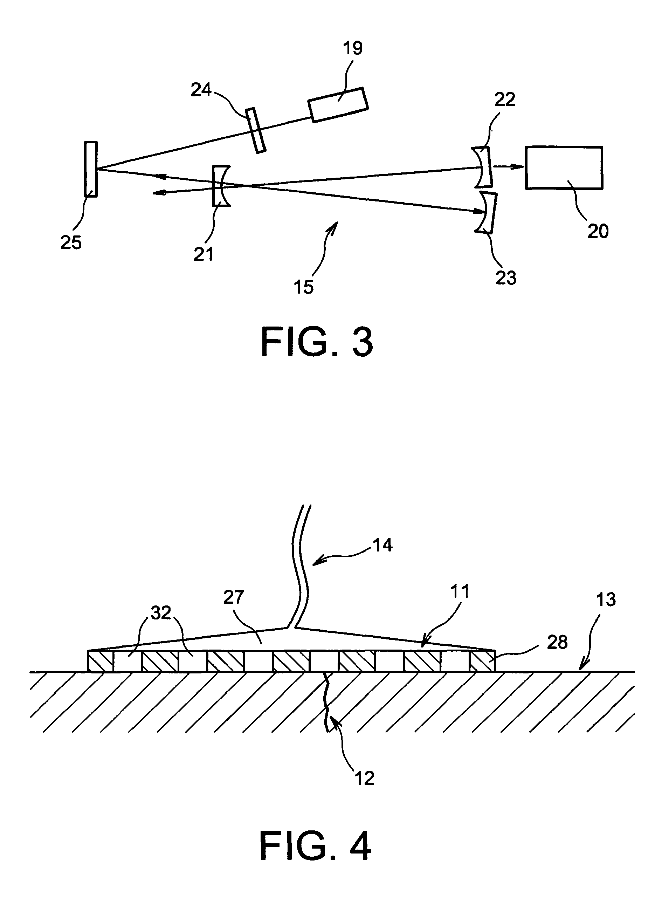

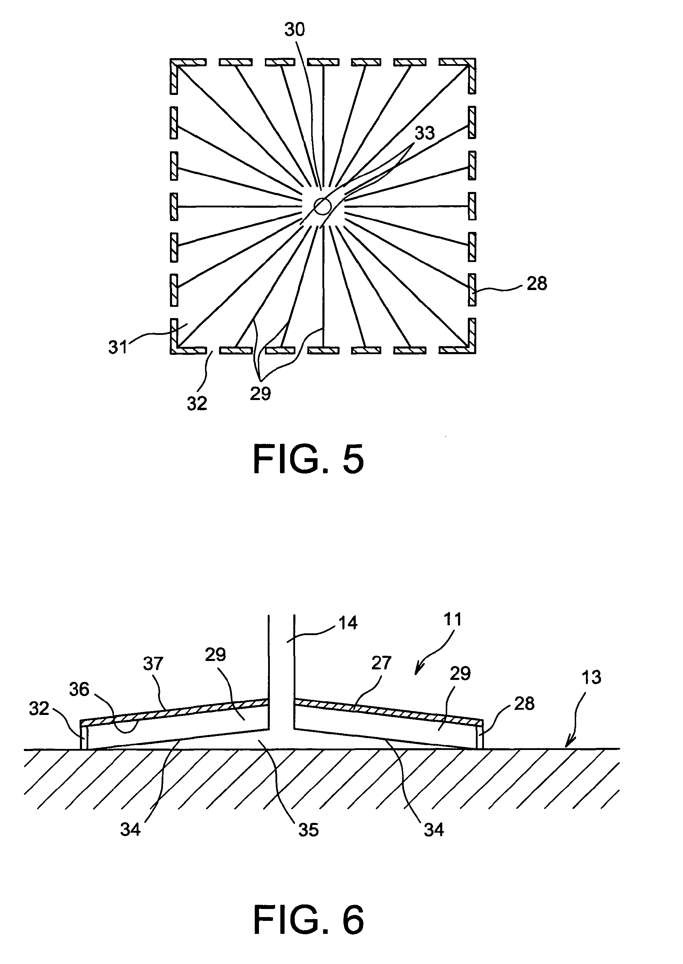

On passe maintenant à la description de la coupelle 11 au moyen des figures 4 et 5.

Elle comprend une face principale 27 supérieure, sensiblement plate, une face périphérique 28 essentiellement perpendiculaire à la précédente et des nervures 29 situées sous la face principale 27 et entourée par la face périphérique 28. Le bord libre de la face périphérique 28 est appliqué sur la paroi 13 à inspecter avec une étanchéité suffisante pour empêcher des débits importants de gaz sous la coupelle 11. La face principale 27 peut avantageusement avoir une forme légèrement bombée ou conique, de manière à faciliter l'application d'une force plaquant la coupelle 11 sur la paroi 13 à examiner et facilitant l'étanchéité entre la coupelle 11 et la paroi 13 à examiner par le bas de la face périphérique 28. En effet, la surface en contact avec la paroi 13 à examiner a avantageusement une forme un peu plus concave que la paroi, de manière que le contact se fait seulement par la face périphérique 28. Le volume de mesure de la coupelle 11 à l'intérieur de celle-ci, est toutefois typiquement beaucoup plus large que haut et de hauteur faiblement variable, contrairement aux formes fortement coniques ou en bulbe, courantes dans diverses techniques. L'orifice du tuyau 14 arrive au milieu de la face principale 27 et la traverse pour déboucher dans un emplacement central 30. Les nervures 29 divergent toutes de l'emplacement central 30 vers la face périphérique 28 en délimitant des canaux 31. Leur hauteur est semblable à celle de la face périphérique 28 de sorte que les canaux 31 ne communiquent pas entre eux, sauf par des fuites si des jeux subsistent avec la paroi 13. La face périphérique 28 est munie d'ouvertures 32 qui permettent respectivement aux canaux 31 de communiquer à l'extérieur. Conformément aux remarques précédentes, les nervures 29 ont, d'après la figure 6, un bord inférieur 34 s'élevant légèrement à partir de la face périphérique 28 de sorte que celle-ci soit bien en appui sur la paroi 13. Le volume 35, sous les bords inférieurs 34, est entraîné par l'écoulement dans les canaux 31. En variante, la face supérieure 27 pourrait avoir un dessous 36 plat au lieu d'être conique, de manière à garder un écoulement invariant en hauteur jusqu'au tuyau 14, le dessus 37 pouvant rester conique pour faciliter la préhension.

Les propriétés principales de l'invention peuvent être énoncées ainsi : comme le vide n'a pas à être établi dans la cavité résonante 15 optique qui constitue le détecteur, un petit débit de pompage est suffisant, ce qui suffit pourtant à aspirer l'essentiel ou la totalité du gaz traceur fuyant tout en le faisant passer entièrement par le détecteur; le laser 19 peut être facilement réglé pour produire une lumière correspondant à une raie d'absorption par l'espèce chimique du gaz traceur; la détection reste rapide grâce au petit volume gazeux du dispositif, qui permet de renouveler un échantillon en quelques secondes ou quelques dizaines de secondes; et surtout, le gaz est aspiré régulièrement dans la coupelle 11, par des courants convergents provenant de l'extérieur et y entrant par les ouvertures 32, en entraînant avec eux tout le gaz de fuite quand il existe, ce qui améliore beaucoup la précision de la détection. Ces avantages proviennent de ce que les canaux imposent des écoulements réguliers, sans volume mort, et que les pertes possibles dues à des courants extérieurs ou à une diffusion sont réduites ou inexistantes, la coupelle 11 pouvant être posée sur la paroi 13 en laissant seulement un jeu très petit. L'avantage est encore plus grand si le gaz est régulièrement accéléré à mesure qu'il est aspiré, ce qu'on peut tenir pour réalisé si l'air des ouvertures 32 d'entrée dans chaque canal 31 est plus grande que la section des canaux 31 aux endroits 33 où ils débouchent dans l'emplacement central 31, et si la section du tuyau 14 est plus petite que la section totale de ces endroits 33.

Une forme importante de l'invention est une cavité résonante 15 optique en vé, que représente la figure 3. Elle est alors délimitée principalement par un miroir d'entrée 21, situé du côté du laser 19, et une paire de miroirs de sortie 22 et 23 situés côte à côte et du côté du photodétecteur 20. Le faisceau lumineux passe encore, dans cette réalisation particulière, par un polariseur 24 et un miroir de renvoi 25 avant d'atteindre le miroir d'entrée 21. Le faisceau lumineux ayant traversé le miroir d'entrée 21 et étant entré dans la cavité résonante 15 arrive d'abord au miroir de sortie 23 avant d'être renvoyé au miroir d'entrée 21, qui le renvoie à son tour à l'autre miroir de sortie 22. Ce dispositif connu en soi a l'avantage de donner un affinement de la raie spectrale de la lumière du laser et une stabilisation de la fréquence.

Des valeurs convenables pour la mise en oeuvre de l'invention sont un volume interne total de 40 cm³ pour la coupelle 11, le tuyau 14 et la cavité résonante 15 ; de 60 à 120 cm³/min pour le débit de pompage ; 86 cm de long au total pour la cavité résonante 15 (en additionnant les deux branches du vé) ; 1 m pour la longueur du tuyau 14 ; 0,36 cm pour les diamètres du tuyau 14 et de la cavité résonante 15. Le laser est à diode réglable. La coupelle 11 a favorablement une forme carrée pour permettre une inspection complète de la paroi 13 par des déplacements successifs selon deux directions. Les côtés du carré peuvent avoir 10 cm de long. La hauteur interne de la coupelle 11 peut avoir 2 mm pour donner un volume intérieur sensiblement égal à 20 cm³. Les nervures 29 et les ouvertures 32 peuvent être au nombre de quatre par côté, et de préférence au nombre de six pour donner un écoulement suffisamment régulier. Dans le cas de six ouvertures et six canaux par côté, chacune des ouvertures 32 peut avoir 2 mm de large et 2 mm de hauteur; les endroits 33 de sortie des canaux 31 peuvent avoir chacun 1,5 mm de large et, de nouveau, 2 mm de haut. Le tuyau 14 peut avoir 1 m de long et une section de 10 mm² pour un volume de 10 cm³ Pour un débit moyen 90 cm³/min, la vitesse du gaz à travers les ouvertures 32 est d'environ 1,4 cm/s, de 2 cm/s aux endroits 33 de sortie des canaux, et le temps total est de l'ordre de 30 s pour que l'échantillon aspiré arrive au détecteur. Des essais ont permis de mesurer des concentrations de 1 à 5 ppb, correspondant à des micro-fuites de l'ordre de 1.10⁻⁸ à 1.10⁻⁹ mbar.l/s, pour des fuites de méthane et d'acétylène. Ces gaz traceurs ont l'avantage d'être peu abondant dans l'air naturel pour le premier (1,9 ppm) et inexistant pour l'autre.

## Revendications

1. Dispositif de détection de micro-fuites sur une paroi, comprenant une coupelle (11) recouvrant et entourant une micro-fuite (12) par une face périphérique (28), un appareil de détection d'une espèce chimique ayant fui, un tuyau (14) reliant une face principale (27) de la coupelle et l'appareil de détection, et une pompe (16) instaurant une circulation de gaz à travers le tuyau, **caractérisé en ce que** la coupelle (11) comprend la face principale (27), la face périphérique (28) et des nervures (29), la face principale étant essentiellement plate, la face périphérique étant essentiellement perpendiculaire à la face principale et pourvue d'ouvertures (32), et les nervures (29) sont situées sous la face principale en divergeant les unes par rapport aux autres dans une direction radiale, d'un emplacement (30) où le tuyau (14) débouche dans la coupelle à la paroi périphérique (28) en délimitant des canaux (31) menant respectivement aux ouvertures (32) de la paroi périphérique.

2. Dispositif de détection de micro-fuites selon la revendication 1, **caractérisé en ce qu'**une aire totale des ouvertures (32) est plus grande qu'une section totale des canaux (31) arrivant à l'emplacement (30) où le tuyau débouche, elle-même plus grande qu'une section du tuyau (14).

3. Dispositif de détection de micro-fuites selon l'une quelconque des revendications 1 ou 2, **caractérisé en ce que** l'emplacement (30) où le tuyau débouche est central, et les canaux et les ouvertures sont au moins huit.

4. Dispositif de détection de micro-fuites selon la revendication 3, **caractérisé en ce que** la coupelle est carrée et comprend six canaux et six ouvertures par côtés.

5. Dispositif de détection de micro-fuites selon l'une quelconque de revendications 1 à 4, **caractérisé en ce que** l'appareil de détection comprend une cavité optique résonante (15) vers laquelle le gaz mis en circulation est dirigé et un laser (19) réglé à une raie d'absorption de lumière par l'espèce chimique, et la pompe (16) a un débit au plus égal à 1 l/min du gaz.

6. Dispositif de détection de micro-fuites selon la revendication 5, **caractérisé en ce que** le débit de la pompe est compris entre 60 et 120 cm³/min du gaz.

7. Dispositif de détection de micro-fuites selon la revendication 5, **caractérisé en ce que** la cavité résonante a une forme en vé.

8. Dispositif de détection de micro-fuites selon l'une quelconque des revendications 1 à 4, **caractérisé en ce que** les nervures (29) ont un bord inférieur (34) s'élevant de la face périphérique (28) au tuyau (14).

## Patentansprüche

1. Vorrichtung zur Erkennung von Mikrolecks an einer Wandung, umfassend eine Schale (11), die ein Mikroleck (12) mit einer Umfangsfläche (28) abdeckt und umgibt, ein Gerät zur Erkennung einer entwichenen chemischen Substanz, eine Röhre (14), die eine Hauptfläche (27) der Schale und das Erkennungsgerät verbindet, und eine Pumpe (16), die einen Gasfluss durch die Röhre in Gang setzt, **dadurch gekennzeichnet, dass** die Schale (11) die Hauptfläche (27), die Umfangsfläche (28) und Rippen (29) umfasst, wobei die Hauptfläche im Wesentlichen flach ist und die Umfangsfläche im Wesentlichen orthogonal zur Hauptfläche und mit Öffnungen (32) versehen ist, und wobei die Rippen (29) unter der Hauptfläche angeordnet sind und in radialer Richtung von einer Stelle (30) ausgehend auseinander laufen, an der die Röhre (14) an der Umfangswand (28) in die Schale mündet, und dabei Kanäle (31) begrenzen, die jeweils zu den Öffnungen (32) der Umfangswand führen.

2. Vorrichtung zur Erkennung von Mikrolecks nach Anspruch 1, dadurch gekenntzeichnet, dass ein gesamter Flächeninhalt der Öffnungen (32) größer ist als ein Gesamtschnitt der Kanäle (31), die an der Stelle (30) ankommen, an der die Röhre einmündet, wobei letzterer größer ist als ein Schnitt der Röhre (14).

3. Vorrichtung zur Erkennung von Mikrolecks nach einem der Ansprüche 1 oder 2, **dadurch gekennzeichnet, dass** die Stelle (30), an der die Röhre einmünden, mittig ist und dass es wenigstens acht Kanäle und Öffnungen gibt.

4. Vorrichtung zur Erkennung von Mikrolecks nach Anspruch 3, **dadurch gekennzeichnet, dass** die Schale viereckig ist und sechs Kanäle und sechs Öffnungen pro Seite aufweist.

5. Vorrichtung zur Erkennung von Mikrolecks nach einem der Ansprüche 1 bis 4, **dadurch gekennzeichnet, dass** das Erkennungsgerät einen optischen Resonator (15) umfasst, zu dem das in Bewegung gebrachte Gas gelenkt wird, und einen Laser (19), der auf eine Lichtabsorptionslinie der chemischen Substanz eingestellt ist, wobei die Pumpe (16) einen Gasdurchfluss von wenigstens 1 l/min aufweist.

6. Vorrichtung zur Erkennung von Mikrolecks nach Anspruch 5, **dadurch gekennzeichnet, dass** der Gasdurchfluss der Pumpe zwischen 60 und 120 cm³/min liegt.

7. Vorrichtung zur Erkennung von Mikrolecks nach Anspruch 5, **dadurch gekennzeichnet, dass** der Resonator eine V-Form aufweist.

8. Vorrichtung zur Erkennung von Mikrolecks nach einem der Ansprüche 1 bis 4, **dadurch gekennzeichnet, dass** die Rippen (29) einen unteren Rand (34) aufweisen, der sich von der Umfangsfläche (28) zur Röhre (14) erhebt.

## Claims

1. A device for detecting micro-leaks in a wall, including a capsule (11) covering and surrounding a micro-leak (12) by a peripheral side (28), a device for detecting a chemical species having leaked, a pipe (14) connecting a main face (27) of the capsule and the detection device, and a pump (16) circulating gas through the pipe, **characterised in that** the capsule (11) includes the main face (27), the peripheral face (28) and ribs (29), where the main face is essentially flat, the peripheral face is essentially perpendicular to the main face and has openings (32), and the ribs (29) are located under the main face, diverging from one another in a radial direction, from a location (30) where the pipe (14) emerges from the capsule to the peripheral wall (28), delimiting channels (31) leading respectively to the openings (32) of the peripheral wall.

2. A device for detecting micro-leaks according to claim 1, **characterised in that** a total area of the openings (32) is larger than a total section of the channels (31) arriving at the vocation (30) where the pipe emerges, itself being larger than a section of the pipe (14).

3. A device for detecting micro-leaks according to either of the claims 1 or 2, **characterised in that** the location (30) where the pipe emerges is central, and **in that** there are at least eight channels and openings.

4. A device for detecting micro-leaks according to claim 3, **characterised in that** the capsule is square and has six channels and six openings per side.

5. A device for detecting micro-leaks according to any of the claims 1 to 4, **characterised in that** the detection device includes a resonant optical cavity (15) towards which the circulating gas is directed, and a laser (19) set to a line of absorption of light by the chemical species, and the pump (16) has a flow rate at most equal to 1 l/min of the gas.

6. A device for detecting micro-leaks according to claim 5, **characterised in that** the flow rate of the pump is between 60 and 120 cm³/min of the gas.

7. A device for detecting micro-leaks according to claim 5, **characterised in that** the resonant cavity is V-shaped.

8. A device for detecting micro-leaks, according to any of the claims 1 to 4, **characterised in that** the ribs (29) have a lower edge (34) which rises from the peripheral face (28) to the pipe (14).
